# EUROPEAN PATENT SPECIFICATION

(11) **EP 0 487 752 B1**
(45) Date of publication and mention of the grant of the patent: **29.03.1995**
(21) Application number: 91911359.7
(22) Date of filing: 21.06.1991
(51) Int. Cl.: B29C 45/26

(54) **METHOD OF FORMING MODULE COVER OF AIR BAG DEVICE**
VERFAHREN ZUM HERSTELLEN EINER MODULABDECKUNG FÜR EINE LUFTSACKVORRICHTUNG
PROCEDE DE PRODUCTION D'UN COUVERCLE DE MODULE POUR COUSSIN PNEUMATIQUE DE SECURITE

(30) Priority: 22.06.1990 JP 164637/90
(43) Date of publication of application: 03.06.1992
(73) Proprietor: TAKATA CORPORATION, Minato-ku, Tokyo 106 (JP)
(72) Inventor: ZUSHI, Takayasu, 255-6, Toga-cho, Shiga 522 (JP)
(74) Representative: Goddard, David John
(86) International application number: JP9100840
(87) International publication number: WO9200179

(56) References cited:
- DE-A- 2 315 905
- GB-A- 2 244 449
- JP-A-56 169 047
- JP-A-62 132 622
- JP-U- 5 688 518
- JP-U- 5 770 823
- PATENT ABSTRACTS OF JAPAN vol. 10, no. 238 (M-508)(2294) 16 August 1986 & JP-A-61 069 422 (SEKISUI CHEM. CO. LTD.)

## Description

### TECHNICAL FIELD

The present invention relates to a method of producing a modular cover for containing an air bag assembly.

### BACKGROUND ART

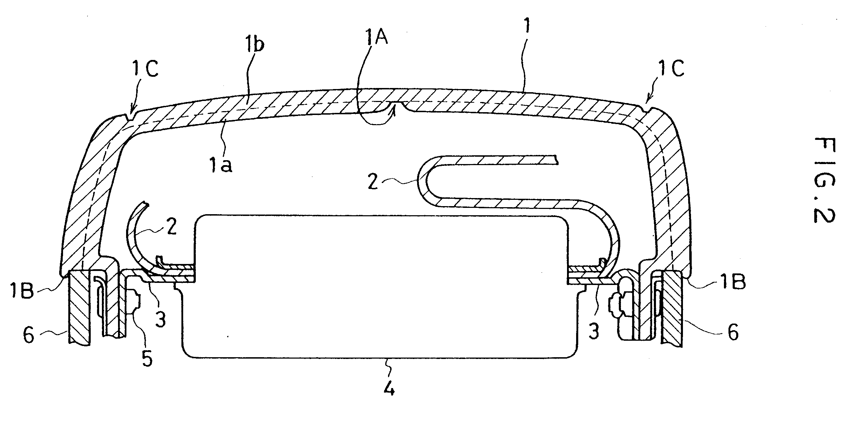

As is known, an air bag assembly includes an air bag adapted to be rapidly deployed in the event of a vehicle collision or emergency situations. As shown in Fig. 2, an air bag 2 is normally folded and covered by a modular cover 1. The air bag 2 as well as an inflator 4 is supported by a mounting plate 3 commonly referred to as a retainer. The modular cover 1 is also secured to the retainer 3 by means of rivets 5, screws or bolts.

Usually, the modular cover 1 includes a rigid layer 1a (core layer) and a soft layer (outer layer) 1b. A groove or tear line 1A is formed in the modular cover 1 to permit the modular cover 1 to rupture when the air bag 2 is deployed. The tear line 1A is weaker and thinner (generally, 0.5 to 1.0 mm) than its adjacent portions. The modular cover 1 can rupture along the tear line 1A when the air bag 2 is deployed.

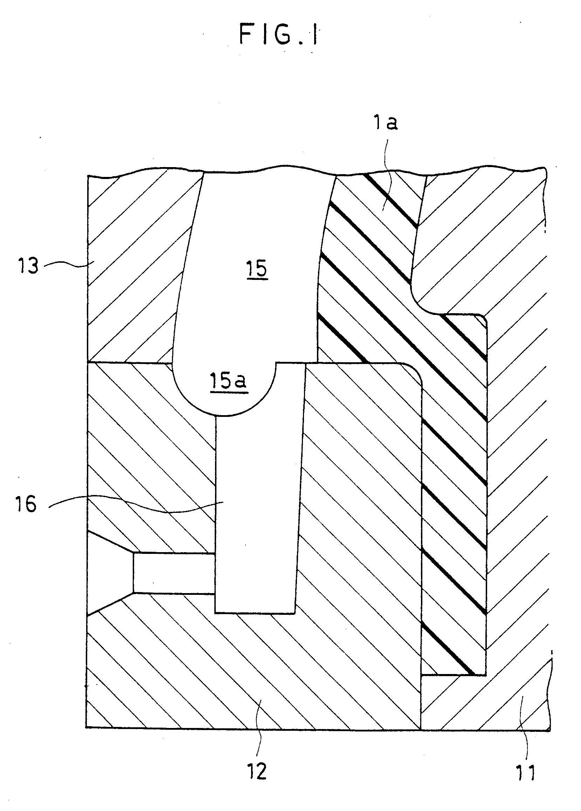

In Fig. 2, 1C is a decorative line. Also, 6 is a body cover. A ridge 1B, referred to as a welting portion 1B, extends from the outer periphery of the modular cover 1 to cover the juncture of the body cover with the modular cover 1.

GB-A-2 224 449 describes an air bag device modular cover having a core layer of a hard resin and an outer layer of a softer resin, the cover being produced by first molding the core layer and then molding the outer layer on the core layer.

Conventionally, expanded urethane integral skin foam or thermoplastic is typically used as a material to produce a modular cover for an air bag assembly. The resin is introduced into a mold of a given shape.

An injection molding is deemed best to produce such a modular cover for an air bag assembly in that it improves the production rate, the operability, and the accuracy of a product. However, when a modular cover is made by an injection molding, a gate mark may be left on the product to significantly deteriorate its aesthetic appearance. Particularly, in the production of a modular cover composed of a core layer and an outer layer, it is difficult to place a gate to form the outer layer, so that a gate mark may not be left on the outer layer. Such a gate mark inevitably appears on the surface of the product.

DE-A-2315 905 describes a method of molding a plastics article of a single layer, the method including the use of a submarine gate having an outlet at a position where the remaining gate mark is hidden from an observer.

### DISCLOSURE OF THE INVENTION

It is an object of the present invention to solve the problems encountered in the prior art and to provide a method of producing a modular cover having at least two-layers for use in an air bag assembly, which prevents any gate mark made during injection molding from been seen by a vehicle occupant, and which improves the aesthetic appearance of the modular cover.

According to the present invention there is provided a method of producing a molded modular cover of an air bag assembly comprising the steps of forming a first mold with a submarine gate, placing second and third molds with said first mold to form a first cavity, introducing a first resin into said first cavity to form a core layer, replacing said second mold with a fourth mold to form a second cavity over the core layer, introducing a second resin into said second cavity to form an outer layer on said cover layer, and removing said modular cover from said mold, said method being characterised by forming a welt forming cavity on a top surface of said first mold, the submarine gate communicating with said welt forming cavity through an outlet located at an inner side of said welt forming cavity which is closer to a central portion of said modular cover than a lowest point of said welt forming cavity, placing said second and third molds with said first mold such that said second mold covers said welt forming cavity whilst forming said first cavity, said first resin being introduced into said first cavity to form said core layer replacing said second mold with said fourth mold so as to uncover said welt forming cavity to form said second cavity which communicates with said welt forming cavity, said second resin being introduced into said welt forming cavity and said second cavity through said outlet to form said outer layer on said core layer, thereby forming the molded modular cover with a welt portion having a gate projection on an inner side thereof; and removing said gate projection from said molded modular cover to leave a gate mark on said inner side of said welt portion so that when said modular cover is installed on a vehicle, said gate mark is situated behind the welt portion relative to a user of a vehicle, thus making the gate mark invisible to the user.

The use of the submarine gate allows the gate to contact with a surface of the modular cover which is hidden in use. A gate mark can not be seen when the molded modular cover is in use.

### BRIEF DESCRIPTION OF THE DRAWINGS

Fig. 1 is a partial sectional view illustrating a method of producing a modular cover for an air bag assembly, according to one embodiment of the present invention;
Fig. 2 is a sectional view of an air bag assembly;

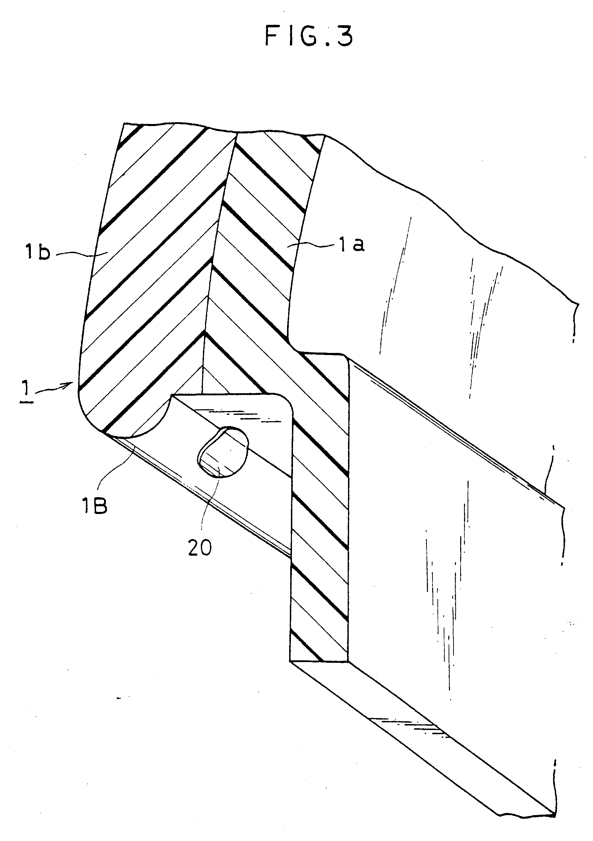

Fig. 3 is a perspective sectional view showing the principal part of the modular cover made according to the present invention; and
Fig. 4 is a sectional view showing the manner in which the cover is produced.

### BEST MODE FOR CARRYING OUT THE INVENTION

The present invention will now be described in more detail, by way of example, with reference to the drawings.

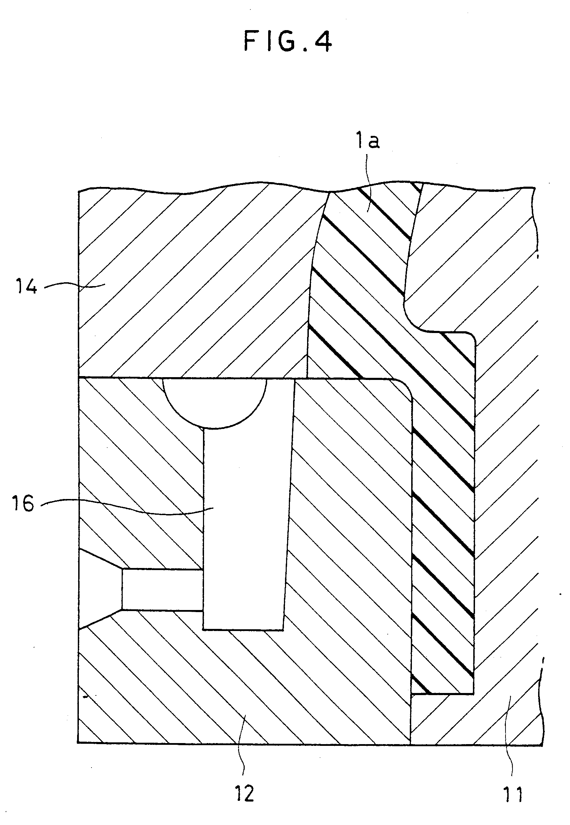

As shown in Fig. 4, three molds 11, 12, 14 are first assembled to form a cavity. Resin is introduced into the cavity through a gate (not shown) placed in any one of the molds 11, 12, 14 so as to form a core layer 1a.

After the mold 14 has been removed, another mold 13 is assembled to the molds 11, 12 to form another cavity 15 outwardly of the core layer 1a as shown in Fig. 1. The mold 12 has a cavity 15a to form a welting portion 1B of the modular cover 1. The cavity 15a is communicated with the cavity 15 which is formed by the mold 13.

A submarine gate 16 is open to the inner side of the cavity 15a. That is, the outlet of the gate 16 is located closer to the central portion of the cover than the lowermost portion of the cavity 15a.

Resin is introduced through the submarine gate 16 into the cavity 15 formed by the molds 12, 13 and the core layer 1a. This provides an outer layer 1b.

After a two-layer structure has been molded by a two-color injection molding, a projection which corresponds in position to the submarine gate 16 during molding is removed from the molded product. A gate mark 20 is left, but on the rear surface of the welting portion 1B. When the modular cover 1 is attached to the air bag assembly, such a gate mark 20 can not be viewed by the occupant of a vehicle. The modular cover can thus have good esthetic appearance.

One embodiment of the present invention has been illustrated, but the present invention is not limited to the illustrated method. A three-color or multi-color injection molding may be used instead of a two-color injection molding. In either event, a submarine gate is placed in the mold to form at least the outer layer of the modular cover.

### INDUSTRIAL APPLICABILITY

As previously described in detail, with the modular cover of the present invention made according to the present invention, a gate mark can not be seen when the modular cover is in use. This improves the esthetic appearance and value of the modular cover.

## Claims

1. A method of producing a molded modular cover (1) of an air bag assembly comprising the steps of:
forming a first mold (12) with a submarine gate (16),
placing second and third molds (14, 11) with said first mold (12) to form a first cavity,
introducing a first resin into said first cavity to form a core layer (1a);
replacing said second mold (14) with a fourth mold (13) to form a second cavity (15) over the cover layer (1a),
introducing a second resin into said second cavity (15) to form an outer layer (1b) on said core layer (1a), and
removing said modular cover (1) from said mold (11, 12, 13),
said method being characterized by:
forming a welt forming cavity (15a) on a top surface of said first mold (12), the submarine gate (16) communicating with said welt forming cavity through an outlet located at an inner side of said welt forming cavity (15a) which is closer to a central portion of said modular cover than a lowest point of said welt forming cavity;
placing said second and third molds (14 and 11) with said first mold (12) such that said second mold (14) covers said welt forming cavity (15a) whilst forming said first cavity, said first resin being introduced into said first cavity to form said core layer (1a);
replacing said second mold (14) with said fourth mold (13) so as to uncover said welt forming cavity (15a) to form said second cavity (15) which communicates with said welt forming cavity (15a), said second resin being introduced into said welt forming cavity (15a) and second cavity (15) through said outlet to form said outer layer (1b) on said core layer (1a), thereby forming the molded modular cover with a welt portion having a gate projection on an inner side thereof; and
removing said gate projection from said molded modular cover to leave a gate mark (20) on said inner side of said welt portion so that when said modular cover is installed on a vehicle, said gate mark (20) is situated behind the welt portion relative to a user of a vehicle, thus making the gate mark (20) invisible to the user.

2. A method of producing a molded modular cover according to claim 1 characterised in that said outlet extends downwardly from said top surface to a point which is higher than said lowest point of said welt forming cavity (15a).

## Patentansprüche

1. Verfahren zum Herstellen einer geformten modularen Abdeckung (1) einer Luftsackanordnung, umfassend die Schritte des:
Ausbildens einer ersten Form (12) mit einem Eingußkanal (16) unter der Teilungsebene,
Plazieren einer zweiten und dritten Form (14, 11) mit der ersten Form (12) zum Ausbilden eines ersten Hohlraums,
Einleiten eines ersten Harzes in den ersten Hohlraum zum Ausbilden einer Kernschicht (1a);
Ersetzen der zweiten Form (14) durch eine vierte Form (13) zum Ausbilden eines zweiten Hohlraums (15) über der Kernschicht (1a),
Einleiten eines zweiten Harzes in den zweiten Hohlraum (15) zum Ausbilden einer äußeren Schicht (1b) auf der Kernschicht (1a), und
Entfernen der modularen Abdeckung (1) aus der Form (11, 12, 13),
wobei das Verfahren **gekennzeichnet** ist durch:
Ausbilden eines eine Einfassung bildenden Hohlraums (15a) auf einer oberen Oberfläche der ersten Form (12), wobei der Eingußkanal (16) unter der Teilungsebene in Verbindung mit dem die Einfassung bildenden Hohlraum durch einen Auslaß ist, der sich an einer inneren Seite des die Einfassung bildenden Hohlraums (15a) befindet, welche näher an einem mittigen Teil der modularen Abdeckung ist als eine niedrigste Stelle des die Einfassung bildenden Hohlraums;
Plazieren der zweiten und dritten Form (14 und 11) mit der ersten Form (12) derart, daß die zweite Form (14) den die Einfassung bildenden Hohlraum (15a) abdeckt, während sie den ersten Hohlraum bildet, das erste Harz wird zum Ausbilden der Kernschicht (1a) in den ersten Hohlraum eingeleitet;
Ersetzen der zweiten Form (14) durch die vierte Form (13) so, daß der die Einfassung bildende Hohlraum (15a) aufgedeckt wird, um den zweiten Hohlraum (15) zu bilden, welcher mit dem die Einfassung bildenden Hohlraum (15a) in Verbindung ist, das zweite Harz wird in den die Einfassung bildenden Hohlraum (15a) und den zweiten Hohlraum (15) durch den Auslaß eingeleitet, um die äußere Schicht (1b) auf der Kernschicht (1a) auszubilden, so daß dadurch die geformte modulare Abdeckung mit einem Einfassungsteil ausgebildet wird, der einen Eingußkanalvorsprung auf einer inneren Seite desselben hat; und
Entfernen des Eingußkanalvorsprungs von der geformten modularen Abdeckung, so daß eine Angußstelle (20) auf der inneren Seite des Einfassungsteils so bleibt, daß sich die Angußstelle (20), wenn die modulare Abdeckung in einem Fahrzeug installiert ist, hinter dem Einfassungsteil relativ zu einem Benutzer einer Fahrzeugs befindet, so daß demgemäß die Angußstelle (20) für den Benutzer unsichtbar gemacht ist.

2. Verfahren zum Herstellen einer geformten modularen Abdeckung gemäß Anspruch 1, dadurch **gekennzeichnet,** daß sich der Auslaß von der oberen Oberfläche nach abwärts zu einer Stelle erstreckt, welche höher als die niedrigste Stelle des die Einfassung bildenden Hohlraums (15a) ist.

## Revendications

1. Procédé de fabrication d'un couvercle modulaire moulé (1) pour un ensemble de coussin de sécurité qui comprend les phases consistant à
former un premier moule (12) muni d'un canal sous-jacent (16),
placer des deuxième et troisième moules (14, 11) avec ledit premier moule (12) pour former une première empreinte,
introduire une première résine dans ladite première empreinte pour former une couche d'âme (1a),
remplacer ledit deuxième moule (14) par un quatrième moule (13) pour former une deuxième empreinte (15) au-dessus de la couche d'âme (1a),
introduire une deuxième résine dans ladite deuxième empreinte (15) pour former une couche extérieure (1b) sur ladite couche d'âme (1a), et
extraire ledit couvercle modulaire (1) dudit moule (11, 12, 13),
ledit procédé étant caractérisé par les phases consistant à
former une empreinte de moulage de couvre-joint (15a) sur une surface supérieure dudit premier moule (12), le canal sous-jacent (16) communiquant avec ladite empreinte de moulage de couvre-joint à travers une sortie située sur le côté intérieur de ladite empreinte de moulage de couvre-joint (15a) qui est plus proche d'une partie centrale dudit couvercle modulaire qu'un point plus inférieur de ladite empreinte de moulage de couvre-joint ;
placer lesdits deuxième et troisième moules (14 et 11) avec ledit premier moule (12) de telle manière que ledit deuxième moule (14) recouvre ladite empreinte de moulage de couvre-joint (15a) pendant la formation de ladite première empreinte, ladite première résine étant introduite dans ladite première empreinte pour mouler ladite couche d'âme (1a) ;
remplacer ledit deuxième moule (14) par ledit quatrième moule (13) de manière à découvrir ladite empreinte de moulage de couvre-joint (15a) pour former ladite deuxième empreinte (15) qui communique avec ladite empreinte de moulage de couvre-joint (15a), ladite deuxième résine étant introduite dans ladite empreinte de moulage de couvre-joint (15a) et dans ladite deuxième empreinte (15) à travers ladite sortie pour mouler ladite couche extérieure (1b) sur ladite couche d'âme (1a), en formant ainsi le couvercle modulaire moulé avec un couvre-joint ayant une protubérance de canal sur son côté intérieur ; et
enlever ladite protubérance de canal dudit couvercle modulaire moulé pour laisser une marque de canal (20) sur ledit côté intérieur dudit couvre-joint, de telle manière que, lorsque ledit couvercle modulaire est monté sur un véhicule, ladite marque de canal (20) soit située derrière le couvre-joint relativement à un utilisateur du véhicule, ce qui rend la marque de canal (20) invisible pour l'utilisateur.

2. Procédé de production d'un couvercle modulaire moulé selon la revendication 1, caractérisé en ce que ladite sortie s'étend vers le bas à partir de ladite surface supérieure, jusqu'à un point qui est plus haut que ledit point le plus inférieur de ladite empreinte de moulage de couvre-joint (15a).
